(19) Europäisches Patentamt
European Patent Office
Office européen des brevets

(11) Veröffentlichungsnummer: **0 392 492 A2**

# (12) EUROPÄISCHE PATENTANMELDUNG

(21) Anmeldenummer: **90106931.0**

(51) Int. Cl.[5]: **C08G 73/02, G02B 1/04**

(22) Anmeldetag: **11.04.90**

(30) Priorität: **13.04.89 DE 3912224**

(43) Veröffentlichungstag der Anmeldung:
**17.10.90 Patentblatt 90/42**

(84) Benannte Vertragsstaaten:
**CH DE FR GB IT LI NL**

(71) Anmelder: **Max-Planck-Gesellschaft zur Förderung der Wissenschaften e.V.**
**Bunsenstrasse 10**
**D-3400 Göttingen(DE)**

(72) Erfinder: **Dominquez, Ligia, Dr.**
**General-Oberst-Beck-Strasse 17**
**D-6500 Mainz(DE)**
Erfinder: **Meyer, Wolfgang H., Dr.**
**Senefelderstrasse 8 d**
**D-6500 Mainz(DE)**
Erfinder: **Simmrock, Ullrich**
**General-Oberst-Beck-Strasse 7**
**D-6500 Mainz(DE)**
Erfinder: **Wegner, Gerhard, Prof. Dr.**
**Carl-Zuckmayer-Strasse 1**
**D-6500 Mainz(DE)**

(74) Vertreter: **Huber, Bernhard, Dipl.-Chem. et al**
**Möhlstrasse 22 Postfach 860 820**
**D-8000 München 86(DE)**

## (54) Polymere mit hohem Brechungsindex und niedriger optischer Dispersion.

(57) Es wird ein Verfahren zur Herstellung von Polymeren mit einer für eine optische Verwendung zweckmäßigen optischen Lage int $n_D$-$v_D$-Diagramm durch metathetischen Gegenionenaustausch beschrieben, das dadurch gekennzeichnet ist, daß man in einer Verbindung der Formel (I)

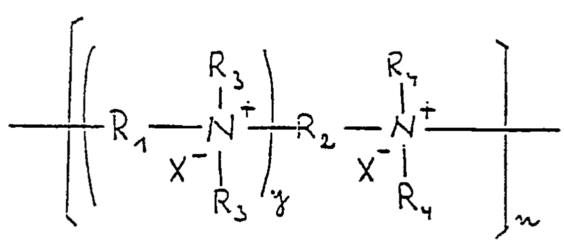

(I)

worin bedeuten:
$R_1$ und $R_2$, die gleich oder verschieden sein können, einen zweiwertigen organischen Rest;
$R_3$ und $R_4$, die gleich oder verschieden sein können, einen einwertigen organischen Rest;
n eine ganze Zahl größer als 2; und
y = 0 oder 1,
und worin $R_1$, $R_2$, $R_3$, $R_4$, y und n so ausgewählt sind, daß sie zusammen ein Polymergrundgerüst bilden, das die Glasbildung fördert und die Kristallisation hindert, und $X^-$ ein Halogenion ist,
das Halogenion durch ein Äquivalent eines von einem Halogenion verschiedenen, zur Einstellung der gewünschten Festkörpereigenschaften geeigneten ein- oder mehrwertigen organischen oder anorganischen Gegenions ersetzt.

Diese Polymeren eignen sich auf Grund ihrer hervorragenden optischen Eigenschaften (hoher Brechungsindex insbesondere in Verbindung mit niedriger optischer Dispersion) sehr gut für die verschiedensten Anwendungen in der Optik, z.B. für optische Bauteile, wie Fresnellinsen oder Lichtwellenleiter, oder als optische



Xerox Copy Centre

Beschichtungen.

Auf Grund ihrer "optischen Lage" im $n_D$-$\nu_D$-Diagramm ist der Einsatz transparenter Kunststoffe in der Optik beschränkt; die Brechwerte (Brechungsindex $n_D$) von bekannten Polymeren liegen im Bereich von ungefähr 1,35 bis 1,70, und es wurde angenommen, daß eine Erweiterung dieses Bereichs nach oben oder unten nicht möglich ist (vgl. z.B. H. Dislich, "Angew. Chemie" 91 (1979) 52 bis 61); für die optische Dispersion erstreckt sich der Bereich zwischen den Abbe-Zahlen von etwa 20 bis etwa 70. Ausnahmen, wie z.B. Poly-N-vinylcarbazol mit einem relativ hohen Brechwert $n_D$ besitzen eine hohe Dispersion (niedrige Abbe-Zahl), oder aber sie besitzen, wie z.B. das Tetrafluorethylen-hexafluorpropylen-copolymer (Teflon FEP), eine relativ geringe optische Dispersion (hohe Abbe-Zahl), dafür aber einen geringen Brechwert. Für viele optische Anwendungen sind aber ein hoher Brechungsindex in Verbindung mit einer geringen optischen Dispersion (hohe Abbe-Zahl) erwünscht; dieser Anwendungsbereich ist deshalb bisher den Gläsern vorbehalten gewesen (vgl. H. Dislich, 1c.).

Aufgabe der vorliegenden Erfindung ist deshalb die Bereitstellung von Polymeren, die auf Grund ihrer optischen Eigenschaften und bei geeigneten mechanischen und chemischen Eigenschaften das Anwendungsgebiet der Kunststoffe in der Optik ergänzen und/oder erweitern können, und insbesondere die Bereitstellung von Polymeren, die einen hohen Brechungsindex aufweisen, insbesondere in Verbindung mit einer niedrigen optischen Dispersion.

Es wurde nun gefunden, daß es möglich ist, in kationischen Polyelektrolyten (Ionenen) gezielt die gewünschten mechanischen und optischen Festkörpereigenschaften (hoher Brechungsindex, insbesondere in Kombination mit einer niedrigen Dispersion) einzustellen, wenn man das Polymergrundgerüst, das insbesondere die Glasbildung fördern und die Kristallisation hindern soll, mit einem geeigneten Gegenion kombiniert.

Gegenstand der Erfindung ist ein Verfahren zur Herstellung von Polymeren (kationischen Polyelektrolyten) mit einer für eine optische Verwendung zweckmäßigen optischen Lage im $n_D$-$\nu_D$-Diagramm, insbesondere mit einem hohen Brechungsindex in Kombination mit einer niedrigen Dispersion, durch metathetischen Gegenionenaustausch, das dadurch gekennzeichnet ist, daß man in einer Verbindung der Formel (I)

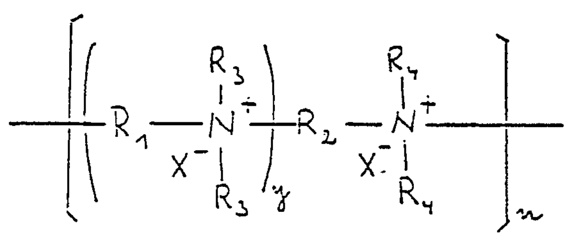

(I)

worin bedeuten:

$R_1$ und $R_2$, die gleich oder verschieden sein können, einen zweiwertigen organischen Rest;

$R_3$ und $R_4$, die gleich oder verschieden sein können, einen einwertigen organischen Rest;

n eine ganze Zahl größer als 2; und

y = 0 oder 1,

und worin $R_1$, $R_2$, $R_3$, $R_4$, y und n so ausgewählt sind, daß sie zusammen ein Polymergrundgerüst bilden, das die Glasbildung fördert und die Kristallisation hindert, und $X^-$ ein Halogenion ist,

das Halogenion durch ein Äquivalent eines von einem Halogenion verschiedenen, zur Einstellung der gewünschten Festkörpereigenschaften geeigneten ein- oder mehrwertigen organischen oder anorganischen Gegenions ersetzt.

Bei den Polymeren der Formel (I) handelt es sich um Polymere, die durch in regelmäßigen Abständen kovalent an der Polymerkette gebundene quartäre Stickstoffionen gekennzeichnet sind, also um kationische Polyelektrolyte (Ionene).

In der Formel (I) bedeuten $R_1$ und $R_2$ insbesondere einen gesättigten oder ungesättigten Alkylen-, Arylen-oder Aralkylenrest, oder einen heterocyclischen Rest, die gegebenenfalls auch durch eine oder mehrere Heteroatome oder Heteroatome enthaltende Gruppen, wie z.B. Ester-, Ether-, Amid-, Carbonat- oder Urethangruppen, unterbrochen sein können; $R_1$ und/oder $R_2$ können auch eine zweiwertige Polymerkette, z.B. Polyalkylen, darstellen oder eine solche enthalten;

$R_3$ und $R_4$ bedeuten vorzugsweise einen verzweigten oder insbesondere geradkettigen Alkylrest, oder können von einem zweiwertigen Rest $R_1$ und/oder $R_2$ abgeleitet sein; ein oder vorzugsweise beide Restepaare $R_3$ und $R_4$ können zusammen auch einen zweiwertigen Rest, insbesondere eine Alkylengruppe, bilden. Die Reste $R_3$ und/oder $R_4$ können auch zweiwertig sein und als Substituenten der Reste $R_1$ und/oder $R_2$ zusammen mit diesen und dem Stickstoffatom einen Heterozyklus bilden, z.B. einen Piperidinring.

Ein von einem Halogenion verschiedenes Gegenion $X^-$ ist insbesondere ein Äquivalent eines ein- bis vierwertigen organischen oder anorganischen Gegenions; vorzugsweise ist $X^-$ niedermolekular.

n ist vorzugsweise 5 bis 1000, insbesondere 50 bis 300.

Die Darstellung von Polyelektrolyten der Formel (I), in denen $X^-$ ein Halogenidion ist, und ihre Eigenschaften, sind aus der Literatur bekannt (vgl. A. Rembaum et al, J.Polym.Sci., Polym.Lett. Ed., 8, 159 (1968); M.F. Hoover, J.Macromol.Sci.Chem. A 4 (6) (1970) 1373-1386; T. Tsutsui, in "Development in Ionic Polymers-2", A.D. Wilson, H.J. Prosser Eds., Elsevier Science, New York 1986); auf Grund der Materialeigenschaften, insbesondere wegen ihrer Hygroskopie, sind diese Halogenidsalze für eine technische Verwendbarkeit weitgehend uninteressant.

Es wurde nun überraschenderweise gefunden, daß sich durch einen Austausch des Halogenidions durch ein Äquivalent eines anderen Gegenions $X^-$ im Rahmen der vorstehend angegebenen Bedeutung die Materialeigenschaften der Polymeren der Formel (I) gezielt ändern und einstellen lassen; die meisten physikalisch-chemischen Eigenschaften, bezüglich der Feststoffeigenschaften insbesondere die Erweichungstemperaturen, die Kristallinität und die Löslichkeiten, können durch den Gegenionenaustausch in einer Weise variiert werden, daß sie den gewünschten Eigenschaften für den Einsatz in der Optik auf vielen Gebieten weitgehend oder völlig entsprechen. Insbesondere besitzen die erfindungsgemäßen Polymeren der Formel (I) hervorragende optische Eigenschaften: Es hat sich gezeigt, daß sich durch geeignete Gegenionen $X^-$ der Brechungsindex der Polymeren der Formel (I) so variieren läßt, daß Werte des Brechungsindex bis zu ca. 2,0 erreicht werden können. Neben einem hohen Brechungsindex weisen die erfindungsgemäßen Polymeren der Formel (I) im allgemeinen auch eine niedrige optische Dispersion auf; auf Grund ihrer günstigen "optischen Lage" im $n_D$-$v_D$-Diagramm (relativ hoher Brechungsindex $n_D$ i.V.m. einer relativ hohen Abbe-Zahl $v_D$) lassen sich mit den erfindungsgemäßen Polymeren der Formel (I) somit optische Bereiche erschließen, die bisher typisch den anorganischen Gläsern vorbehalten waren. Die Einstellung der optischen Eigenschaften erfolgt dabei in erster Linie durch den metathetischen Gegenionenaustausch, d.h. durch die Kombination des Polymergrundgerüstes mit einem geeigneten Gegenion. Durch eine geeignete Auswahl und Kombination von organischen und anorganischen Strukturelementen, die bei den erfindungsgemäßen Polymeren der Formel (I) so miteinander verknüpft werden können, daß keine Phasentrennungen oder andersgeartete Entmischungserscheinungen zu erwarten sind, ist es auf diese Weise möglich, auf einfache Weise für das jeweilige Einsatzgebiet gewünschte optimale Eigenschaften einzustellen.

In bevorzugten Ausführungsformen weisen die Strukturelemente der Polymeren der Formel (I) die vorstehend und nachfolgend als bevorzugt beschriebenen Reste, Strukturformeln und/oder deren Kombinationen auf. Die für das jeweilige Einsatzgebiet zweckmäßigsten Kombinationen (Struktur des Polymergrundgerüsts und Art des Gegenions $X^-$) sind leicht durch einige wenige orientierende Versuche zu ermitteln.

Einige dieser bevorzugten oder zweckmäßigen Ausführungsformen sind Gegenstand der Ansprüche 2 bis 11.

Ein gesättigter oder ungesättigter Alkylenrest $R_1$ oder $R_2$ besitzt vorzugsweise 2 bis 30, und insbesondere 3 bis 15, Kohlenstoffatome, und ist z.B. Trimethylen, Hexamethylen, Decamethylen oder Eicosamethylen, oder die Gruppierung $-CH_2-CH=CH-CH_2-$; ein Arylen- oder Aralkylenrest leitet sich vorzugsweise von einem Naphthylen- und insbesondere Phenylenrest ab, und ist z.B. 2,6-Naphthylen oder 1,4-Phenylen, oder er wird durch ein oder zwei aromatische Reste, die über eine Alkylengruppierung miteinander und/oder mit den Stickstoffatomen verknüpft sind, gebildet, und ist z.B.

Gruppierung 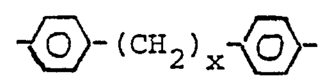 oder die Gruppierung

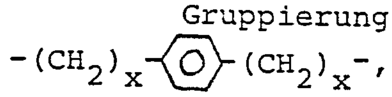

worin x vorzugsweise 1 bis 4 bedeutet; an die Stelle des Arylrestes kann auch ein heterocyclischer zweiwertiger Rest treten, z.B. ein von Pyridin oder Chinolin abgeleiteter Rest.

Eine geradkettige oder verzweigte Alkyl gruppe $R_3$ oder $R_4$ ist vorzugsweise eine Niederalkylgruppe mit 1 bis 7 Kohlenstoffatomen, und insbesondere mit 1 bis 4 Kohlenstoffatomen, wie z.B. n-Butyl, tert.-Butyl, Isobutyl, n-Propyl, Isopropyl, und ist insbesondere Ethyl und in erster Linie Methyl.

$X^-$ kann ein Äquivalent eines organischen oder anorganischen einfachen Ions oder eines Komplexions, z.B. vom Typ $[MY_4]$ oder $[MYL_5]$ sein; bevorzugte Beispiele solcher Ionen sind: $TOS^-$, $CF_3SO_3^-$, $DoSO_4^-$, $BF_4^-$, $ClO_4^-$, $PF_6^-$, $SbF_6^-$, $SCN^-$, $BPh_4^-$, $FeCl_4^-$, $SO_4^{2-}$, $PbCl_6^{2-}$, $[Fe(CN)_6]^{3-}$, $[Fe(CN)_6]^{4-}$, $[SO_3PhSO_3]^{2-}$ und

$MY_4^2$ worin M = Zn, Cd, Hg und Y = Cl, Br, J bedeuten, wie z.B. $ZnCl_4^2$ , $ZnBr_4^2$ , $ZnJ_4^2$ , $CdJ_4^2$ , $HgJ_4^2$ (TOS = Tosylat, Ph = Phenyl ,$DoSO_4$ = Dodecylsulfat). Es können auch zwei oder mehrere verschiedene Ionen $X^-$ in einem Polymeren der Formel (I) vorliegen, z.B. $BF_4^-$ /$PF_6^-$ im Verhältnis 1/1.

Nachfolgend werden einige zweckmäßige Ausführungsformen der erfindungsgemäß hergestellten Polyelektrolyte der Formel (I) (die auch als "Ionene" bezeichnet werden) angegeben; die für die als "Ionene" bezeichnet werden) angegeben; die für die einzelnen Ionene angegebene Bezeichnungsweise entspricht der für Ionene gebräuchlichen Nomenklatur.

a) Asymmetrische Ionene:
(I-1,m-R-X-Ionen)

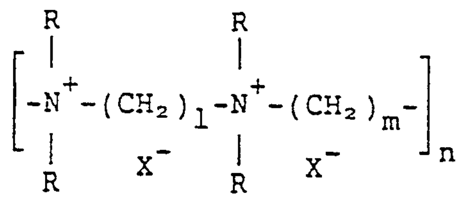

l = Anzahl der Methylengruppen im N,N,N'N'-Tetraalkyl-α,ω-Diaminoalkan.
m = Anzahl der Methylengruppen im α,ω-Dibromalkan.
R = Seitenkette am Stickstoff.
$X^-$ = Gegenion.

b) Symmetrische Ionene:
(I-m-R-X-Ionen)

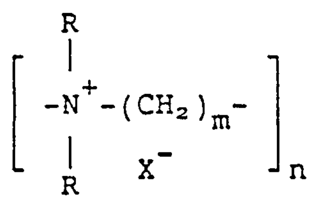

m = Anzahl der Methylengruppen im N,N,N',N'-Tetraalkyl-α,ω-Diaminoalkan und im α,ω-Dibromalkan.

c) Trimere:
(T-m-e$R_1$-X-Trimer)

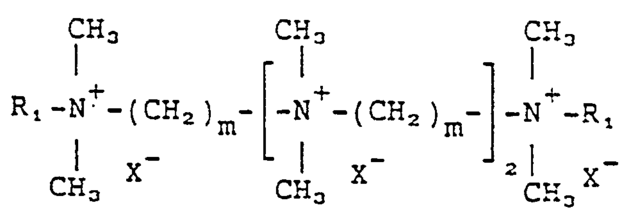

e$R_1$ = Alkylendgruppe.

d) Ionene mit DABCO-Einheiten (DABCO = 1,4-Diazo[2.2.2.]bicyclooctan).
(I-DABCO-m-X-Ionen)

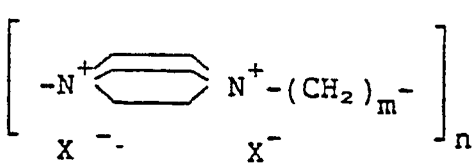

m = Anzahl der Methylengruppen im α,ω-Dibromalkan.

e) Aromatische Ionene aus p-Xylylendibromid.

(I-pXy-X-Ionen)

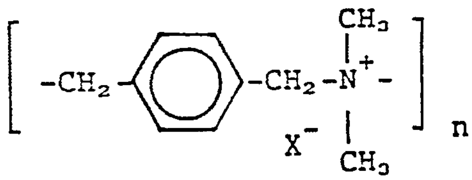

f) (I-Do/Pip-Me-X)

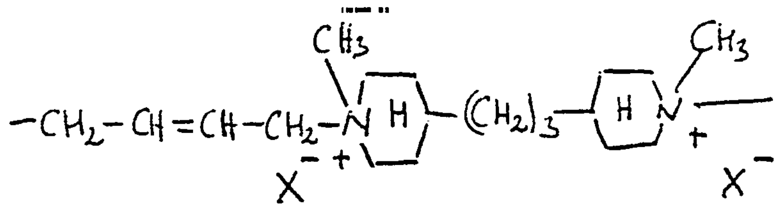

Für den metathetischen Austausch von Halogenidionen gegen die erfindungsgemäßen Gegenionen geht man von den entsprechenden Halogeniden aus, die z.B. durch Umsetzung einer $\alpha,\omega$-DibromVerbindung der Formel $Br-R_2-Br$ mit einer N,N,N',N'-Tetramethyl-$\alpha,\omega$-diaminoverbindung der Formel $(R_3)_2-N-R_1-N-(R_4)_2$ erhalten werden können (vgl. A. Rembaum et al, 1c.).

In diesen Halogeniden (vorzugsweise Chloriden oder Bromiden) kann der Austausch durch das Gegenion $X^-$ nach einer der folgenden Methoden stattfinden:

1. Behandlung des gelösten Halogenids mit einer Silbersalzlösung, die das gewünschte Anion enthält (Reaktion 1). Wenn das Silbersalz des Gegenions, das eingeführt werden soll, nicht zur Verfügung steht, stellt man durch Reaktion mit feuchtem Silberoxid das Hydroxid her, das dann durch Neutralisation mit Säuren fast beliebig abwandelbar ist (Reaktion 2).

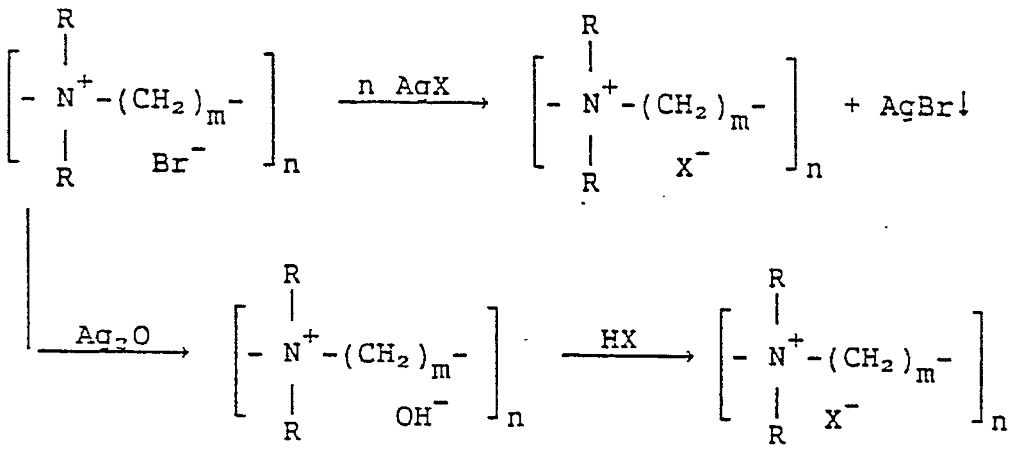


(1)

(2)

2. Durch direkte Zugabe einer Säure (oder deren Alkalisalzen) mit dem entsprechenden Gegenion $X^-$;

3. durch alkylierenden Ionenaustausch mit Ethylenoxid nach der Reaktion (3)

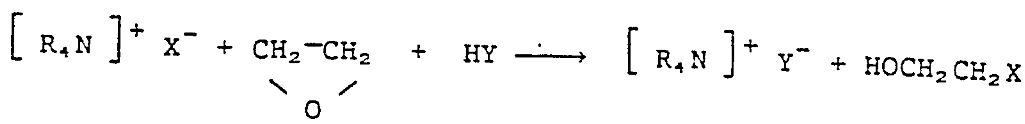

(3)

unter der Voraussetzung, daß das zu ersetzende Halogenion nukleophiler ist als das einzuführende Gegenion $X^-$ (vgl. O. Sackur, Bulletin de la Societe Chimique de France 19 (5) (1952) 796).

Erfindungsgemäß wird vorzugsweise nach der Methode 1 oder 2 gearbeitet. Als Salz in der Methode 2

wird vorzugsweise das Kaliumsalz verwendet. Die einzelnen Verfahrensschritte können dabei auf für derartige Umsetzungen an sich bekannte Weise und unter an sich bekannten und dafür üblichen Bedingungen (wie z.B. Temperatur, Druck, Lösungsmittel) durchgeführt werden.

Eine Ausführungsform der vorliegenden Erfindung betrifft deshalb ein Verfahren, das dadurch gekennzeichnet ist, daß man eine Verbindung der Formel (I), worin $X^-$ ein Halogenid, vorzugsweise Chlorid oder Bromid, bedeutet,

(i) mit einem Silbersalz, das das gewünschte einzuführende Ion $X^-$ enthält, umsetzt, oder

(ii) durch Umsetzung mit feuchtem Silberoxid das Hydroxid herstellt, und das so erhaltene Hydroxid mit einer Säure, die das gewünschte einzuführende Ion $X^-$ enthält, neutralisiert, oder

(iii) mit einer Säure oder dem Alkalisalz mit dem gewünschten einzuführenden Ion $X^-$ umsetzt, oder

(iv) unter der Voraussetzung, daß das zu ersetzende Halogenidion nukleophiler ist als das gewünschte einzuführende Ion $X^-$, mit Ethylenoxid in Gegenwart einer Säure, die das gewünschte einzuführende Ion $X^-$ enthält, umsetzt.

Das erfindungsgemäße Verfahren führt, insbesondere bei Anwendung der Verfahrensvarianten (i), (ii) und (iii), zu einem praktisch quantitativen Ionenaustausch.

In der nachfolgenden Tabelle 1 ist für einige typische erfindungsgemäße Gegenionen $X^-$ das bevorzugte Verfahren angegeben.

Tabelle 1

Methode I: Ionenaustausch durch Anwendung der Silbersalze der gewünschten Gegenionen :
$TOS^-$, $CF_3SO_3^-$, $DoSO_4^-$, $SO_4^{2-}$, $[Fe(CN)_6]^{3-}$, $[SO_3PhSO_3]^{2-}$,

Methode II:Ionenaustausch durch Zugabe der Säure oder des Kaliumsalzes der einzuführenden Gegenionen :
$BF_4^-$, $ClO_4^-$, $PF_6^-$, $SbF_6^-$, $SCN^-$, $BPh_4^-$ $FeCl_4^-$, $ZnCl_4^{2-}$, $ZnBr_4^{2-}$, $ZnJ_4^{2-}$, $HgJ_4^{2-}$, $CDBr_4^{2-}$, $CdJ_4^{2-}$

In den nachfolgenden Tabellen 2 bis 5 sind die mit verschiedenen Ionenen der Formel (I) erhaltenen Ergebnisse des Ionenaustausches zusammengestellt (das Halogenid der Ausgangsverbindung ist Bromid; die Prozentzahlen des Ionenaustausches wurden durch Elementaranalyse bestimmt).

Tabelle 2

| Ergebnisse des Ionenaustausches bei I-6-Me-X-Ionenen. | | | | |
|---|---|---|---|---|
| Gegenion | Y | Prozent des Ionenaustauschs | Restbromgehalt | Trockenverlust |
| | | (%) [1] | (%) [2] | (%) [2] |
| $Cl^-$ | Cl | 88.0 | --- | 6.1 |
| $TOS^-$ | S | 95.0 | <0.1 | 2.6 |
| $CF_3SO_3$ | F | 98.7 | 0.1 | 1.8 |
| $DoSO_4$ | S | ~100.0 | 0.6 | 0.7 |
| $BF_4$ | F | 87.0 | 0.4 | 2.5 |
| $ClO_4$ | Cl | 99.0 | < 0.05 | 1.9 |
| $PF_6$ | F | 98.0 | 0.51 | 1.2 |
| $SbF_6$ | F | 97.8 | 1.18 | 1.6 |
| $SCN^-$ | S | 81.9 | --- | 2.9 |
| $BPh_4$ | -- | --- | 4.39 | 3.7 |
| $FeCl_4$ | Cl | 99.5 | --- | 2.7 |
| $ZnCl_4^{2-}$ | Cl | 99.0 | --- | 0.1 |
| $ZnBr_4^{2-}$ | Br | ~100.0 | --- | 3.5 |
| $ZnJ_4^{2-}$ | J | 61.9 | --- | 1.2 |
| $CdJ_4^{2-}$ | J | 78.7 | --- | 0.4 |
| $HgJ_4^{2-}$ | J | ~100.0 | --- | 0.3 |
| $[Fe(CN)_6]^{3-}$ | Fe | 92.0 | 3.57 | 5.1 |
| $[Fe(CN)_6]^{4-}$ | Fe | ~100.0 | 0.18 | 1.3 |
| $[So_3PhSO_3]^{2-}$ | S | 95.8 | --- | 2.6 |

(1) Prozent der Theorie bezogen auf die Elementaranalyse von Y.
(2) Angabe in Gewichts-Prozent. Wasserverlust nachdem die Proben 48 Stunden bei 40 °C unter Vakuum (2 mbar) getrocknet worden waren.

Tabelle 3

| Ergebnisse des Ionenaustausches bei I-6-Et-X-Ionenen. | | | |
|---|---|---|---|
| Gegenion | Y | Prozent des Ionenaustauschs | Trockenverlust |
| | | (%) [1] | (%) [2] |
| $TOS^-$ | S | 97.0 | 0.5 |
| $CF_3SO_3^-$ | F | 97.8 | 3.1 |
| $BF_4^-$ | F | 97.0 | 0.2 |
| $PF_6^-$ | F | 99.3 | 0.6 |
| $SbF_6^-$ | F | 99.3 | 0.7 |
| $ZnBR_4^{2-}$ | Br | ~100.0 | 2.3 |

(1)Prozent der Theorie bezogen auf die Elementaranalyse von Y
(2) Angabe in Gewichts-Prozent. Wasserverlust nachdem die Proben bei 40 °C unter Vakuum (2 mbar ) getrocknet worden waren.

Tabelle 4

| Ergebnisse des Ionenaustausches bei I-10-Me-X-Ionenen. | | | |
|---|---|---|---|
| Gegenion | Y | Prozent des Ionenaustauschs | Trockenverlust |
| | | (%) [1] | (%) [2] |
| $TOS^-$ | S | ~100.0 | 0.7 |
| $CF_3SO_3^-$ | F | 98.6 | 1.0 |
| $BF_4^-$ | F | 99.7 | 0.6 |
| $PF_6^-$ | F | 99.7 | 0.6 |
| $SbF_6^-$ | F | ~100.0 | 0.2 |
| $FeCl_4^-$ | CL | 99.7 | 0.1 |
| $ZnBr_4^{2-}$ | Br | 99.6 | 1.5 |
| $[Fe(CN)_6]^{3-}$ | Fe | 93.9 | 5.0 |

(1)Prozent der Theorie bezogen auf die Elementaranalyse von Y
(2) Angabe in Gewichts-Prozent. Wasserverlust nachdem die Proben bei 40 °C unter Vakuum ( 2 mbar) getrocknet worden waren.

Tabelle 5

| Ergebnisse des Ionenaustausches für verschiedene Polymere | | | |
|---|---|---|---|
| Ionene | Y | Prozent des Ionenaustauschs | Trockenverlust |
| | | (%) [1] | (%) [2] |
| I-20-Me-$TOS^-$ | S | 92.6 | 3.6 |
| I-20-Me-$BF_4^-$ | F | ~100.0 | 0.7 |
| I-20-Me-$PF_6^-$ | F | 99.3 | 0.5 |
| I-20-Me-$SbF_6^-$ | F | 95.2 | 0.6 |
| I-20-Me-$FeCl_4^-$ | Cl | 93.9 | 1.1 |
| I-20-Me-$ZnBr_4^{2-}$ | Br | 98.8 | 0.7 |
| I-3-Me-$BF_4^-$ | F | 99.4 | 1.4 |
| I-3-Me-$PF_6^-$ | F | 96.0 | 0.7 |
| I-3-Me-$SbF_6^-$ | F | 96.8 | 0.7 |
| I-DABCO-6-$TOS^-$ | S | 92.5 | 4.8 |
| I-DABCO-6-$BF_4^-$ | F | 91.3 | 6.8 |
| I-DABCO-6-$ZnBr_4^{2-}$ | Br | ~100.0 | 3.5 |

(1)Prozent der Theorie bezogen auf die Elementaranalyse von Y
(2) Angabe in Gewichts-Prozent. Wasserverlust nachdem die Proben bei 40 °C unter Vakuum (2 mbar) getrocknet worden waren.

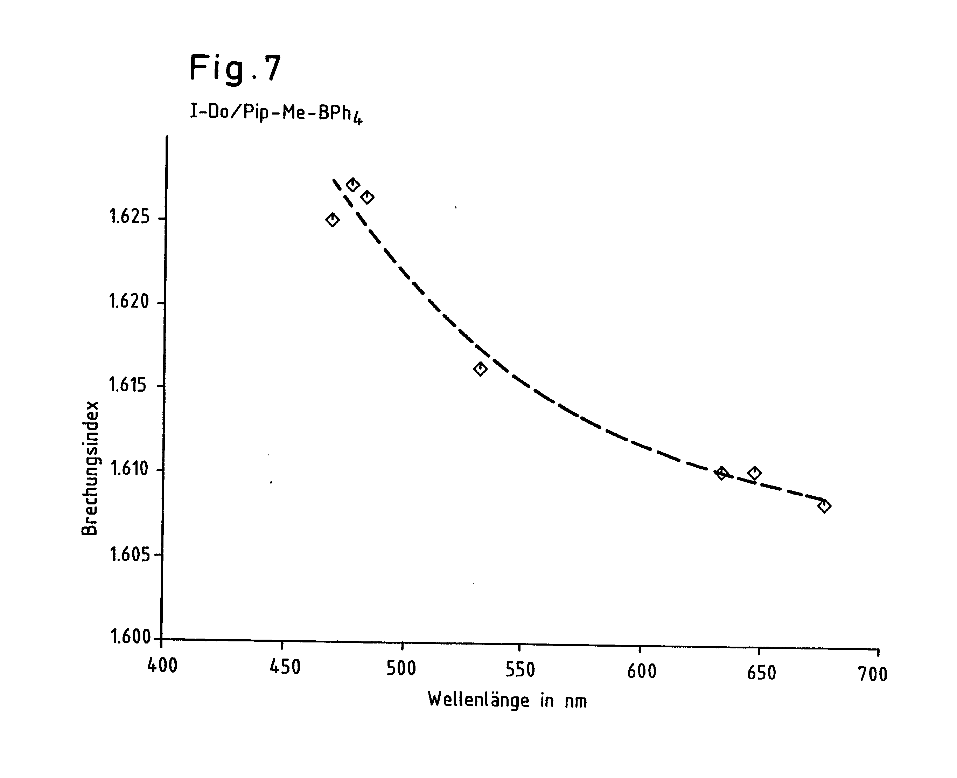

Die nachfolgenden Herstellungsbeispiele für erfindungsgemäße Ionen der Formel (I) sollen die Erfindung näher erläutern in Verbindung mit den Figuren 1 bis 7 der Zeichnung, in denen die Dispersionskurven der Brechungsindices für einige erfindungsgemäße Substanzen gezeigt werden.
Wenn nicht anders angegeben, beziehen sich Temperaturangaben auf die Celsius-Skala; Mengenangaben auf Gewichtsteile und Gewichtsprozente.

## Beispiele

Beispiel 1: Herstellung von I-6-Me-TOS.

1 g (0.0048 Mol) I-6-Me-Br-Ionen wurde in 50 ml Methanol gelöst und mit 1.34 g (0.0048 Mol) Silbertosylat umgesetzt. Der Kolben wurde mit Alumminiumfolie vor Licht geschützt, um die Zersetzung des Silberbromids zu verhindern. Die Lösung wurde 1/2 Std. gerührt bis das Silberbromid (gelbes Pulver) ausgefallen war. Es wird durch mehrere Membranfilter (mit Porengrößen zwischen 5 und 0.2 µm) abfiltriert. Das Polymer wurde in Aceton oder in einer Aceton-Ether-Mischung ausgefällt und bei 40-50 °C unter Vakuum getrocknet. Die Vollständigkeit des Ionenaustausches mit Silbersalzen kann potentiometrisch verfolgt werden.

Beispiel 2: Herstellung von I-6-Me-Triflat.

1.64g (0.096 Mol) Silbernitrat wurden in 50 ml Wasser gelöst und eine wässrige Natriumhydroxid-Lösung (0.38 g NaOH, 0.096 Mol) langsam zugetropft. Das Silberoxid fällt als schwarzbraunes Pulver aus. Es wurde dann abdekantiert und einige Male mit Wasser gewaschen. 2 g I-6-Me-Br-Ionen (0.096 Mol) wurden in 50 ml Methanol gelöst und zu dem feuchten Silberoxid gegeben. Die Reaktion läuft unter Ausschluß von Licht. Das Silberbromid wurde abfiltriert. Wenn die Silberbromidpartikel zu klein sind, um sie durch Filtration abtrennen zu können, wird die Lösung bei 4 000 U/min zentrifugiert und anschließend durch ein Membranfilter mit 0.2 µm Porengröße filtriert. 1.67 ml Trifluormethansulfonsäure wurden langsam. zugetropft. Das Polymer wurde aus einer Ether-Aceton-Mischung 1:1 ausgefällt.

Beispiel 3:

Allgemeine Methode ohne Anwendung von Silbersalzen.

Zu einer Lösung des Polymers in Methanol oder Wasser wurde die entsprechende Säure langsam zugetropft und das Polymer mit dem neuen Gegenion fällt aus.

Zur Herstellung der Ionene mit Gegenionen des Typs $MY_4^{2-}$ wurden die Metalldihalogenide $MY_2$ benutzt.

Beispiel 4: Herstellung von I-6-Me-$ZnBr_4^{2-}$

Zu einer alkoholischen Lösung von I-6-Me-Br-Ionen wurde eine alkoholische Lösung von $ZnBr_2$ zugetropft. Das Polymer fällt aus der Lösung aus und wird abfiltriert.

Analog zu den vorstehenden Beispielen lassen sich, ausgehend von den entsprechenden Ionenen und Silbersalzen oder Säuren/Salzen mit den gewünschten einzuführenden Gegenionen $X^-$ entsprechende andere erfindungsgemäße Ionene, wie z.B. die in den vor- und nachstehenden Tabellen angegebenen erfindungsgemäßen Polymere der Formel (I) herstellen.

Die Charakterisierung der Produkte erfolgte mittels IR- und NMR-Spektrometrie und Elementaranalyse.

Bestimmung der Brechungsindizes

Die Brechungsindizes der erfindungsgemäßen Polymeren wurden an dünnen Filmen nach drei verschiedenen Methoden bestimmt:

1. Brechungsindexbestimmung mittels Interferometrie kombiniert mit separater Schichtdickenbestimmung;
2. Brechungsindexbestimmung mittels winkelabhängiger Einkopplung als Lichtwellenleiter;
3. Brechungsindexbestimmung über Plasmonenspektroskopie.

Nach der Methode 2) an Filmproben der erfindungsgemäßen Ionene konnte die Einsatzmöglichkeit der erfindungsgemäßen Polymeren als Wellenleiter demonstriert werden. Diese Methode stellt die genaueste Methode zur Brechungsindexbestimmung dar (Genauigkeit ± 0,0005 ).

Beschreibung der Methode 1:

Der Brecnungsindex der erfindungsgemäßen Polymeren wurde mit Hilfe der Interferometrie bestimmt. Dazu wurden Polymerfilme durch Eindampfen von Lösungen der Polymeren auf Objektträgern hergestellt. Die Proben wurden über Nacht bei 50°C im Vakuum getrocknet. Die interferometrischen Messungen wurden mit einem Simultan-Spektrometer der Firma Zeiss, Oberkochen, BRD, durchgeführt. Bei dieser Methode fällt weißes Licht auf die dünne Polymerschicht. Die von Vorder- und Rückseite reflektierten Strahlen interferieren und es entsteht ein charakteristisches Interferenzmuster, mit Minima der Intensität für die Wellenlänge, bei denen die Teilbündel destruktiv interferieren und Intensitätsmaxima für die Wellenlängen, bei denen konstruktive Interferenz stattfindet. Wenn keine Absorption des Lichts stattfindet gilt:
$2 n d = m \lambda$

$$2 n d = \frac{\lambda_1 \lambda_2 P}{\lambda_1 - \lambda_2}$$

n = Brechungsindex.
d = Dicke der Probe.
m = Ordnungszahl.
$\lambda_1$, $\lambda_2$ = Wellenlänge von zwei Maxima
P = Periode zwischen zwei Maxima.

Nach der vorstehend beschriebenen Methode kann nur die optische Dichte, d.h. das Produkt n x d = OD bestimmt werden. Um die Brechungsindizes berechnen zu können, wurden deshalb die Schichtdicken der untersuchten Filme separat mittels eines kommerziellen Schichtdickenmeßgerätes (Alphastep der Firma Tencor Instruments) bestimmt. Durch die Ungenauigkeit der Angabe der Wellenlängenwerte der Intensitätsmaxima bzw. -minima ist die Genauigkeit der Brechungsindexbestimmung insgesamt nach dieser Methode auf etwa ± 5 % beschränkt.

In der Tabelle 6 sind für einige erfindungsgemäße Polyelektrolyte die nach dieser Methode ermittelten Werte des Brechungsindex (Brechwerte) angegeben.

Tabelle 6

Brechwerte von Ionenen:

| Formel | Struktur | Gegenion $X^-$ | Brechwert n |
|---|---|---|---|
| I-6-Me-X | 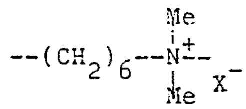 | $CF_3SO_3^-$ | 1,44 |
| | | $BF_4^-$ | 1,60 |
| I-6/10$_{Stat}$-Me-X | 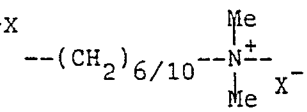 | $BF_4^-$ | 1,60 |
| | (statistisches Copolymer) | 1/2 $ZnBr_4^{2-}$ | 1,60 |
| | | 1/2 $HgJ_4^{2-}$ | 2,00 |
| I-10-Me-X | 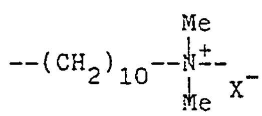 | $BF_4^-$ | 1,65 |
| | | 1/2 $CdBr_4^{2-}$ | 1,65 |
| | | 1/2 $ZnBr_4^{2-}$ | 1,70 |
| | | 1/2 $HgJ_4^{2-}$ | 1,78 |
| | | 1/2 $ZnJ_4^{2-}$ | 1,79 |
| I-10/Do-Me-X | 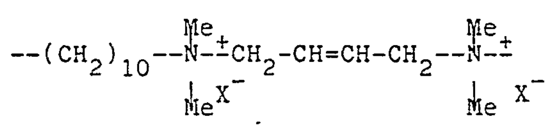 | 1/2 $HgJ_4^{2-}$ | 1,83 |
| I-Do/Pip-Me-X | 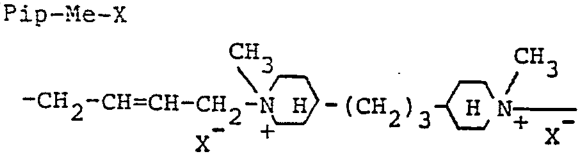 | $PF_6^-$ | 1,54 |
| | | $BF_4^-$ | 1,57 |

Beschreibung der Methode 2:

Die Brechungsindexbestimmung und Ermittlung der Abbe-Zahlen erfolgte durch winkelabhängige Einkopplung eines Lichtstrahls in einen planaren Lichtwellenleiter nach der Methode des "Prismen-Kopplers". Diese Methode eignet sich besonders für die Bestimmung optischer Daten wie Brechungsindizes in dünnen,

planaren Schichten.

Die Methode nutzt die Abhängigkeit der Einkopplung eines Laserstrahls mit Hilfe eines Prismas in eine planare Schicht vom Winkel $\theta$ aus,der zwischen dem einfallenden Strahl und der Prismenbasis gebildet wird. Einkopplung des Lichts erfolgt nur, wenn dieser Winkel so gewählt wird, daß die Phasengeschwindigkeit der einfallenden Lichtwelle gleich der Phasengeschwindigkeit einer der charakteristischen Moden der Lichtausbreitung im Wellenleiter ist.

Umgekehrt kann man durch Bestimmunß des Winkels $\theta$ im Falle der Lichteinkopplung die charakteristischen Konstanten des Wellenleitermaterials berechnen.Da weder der Brechungsindex des Wellenleitermaterials bei einer bestimmten Wellenlänge noch dessen Schichtdicke bekannt ist,werden die charakteristischen Konstanten auch aus der Dispersionsgleichung für planare Wellenleiter berechnet.Die Lösung dieser Gleichung erfordert einen gewissen Rechenaufwand,der den Einsatz eines Computers notwendig macht. Details zur Auswertung der Prismen-Koppler-Methode sind in einem Artikel von R.Ulrich und R.Torge (Applied Optics 12(12)2901(1973)) beschrieben. Durch unabhängige Bestimmung der Werte $\theta$ für wenigstens 2 Moden sind die beiden Unbekannten Schichtdicke und Brechungsindex eindeutig bestimmbar.

Führt man die vorstehend beschriebene Methode mit Licht verschiedener Wellenlängen durch,so kann man die Dispersionskurve der Brechungsindizes bestimmen,und damit auch die Abbe-Zahlen berechnen.Die Methode ist mindestens auf ± 0,0005 genau.

In der Tabelle 7 sind für einige erfindungsgemäße Polymere die nach dieser Methode ermittelten Werte des Brechungsindex ($n_D$) und der Abbe-Zahl ($\nu_D$) angegeben. Die Figuren 1 bis 7 zeigen die Dispersionskurven der Brechungsindizes n; die erfindungsgemäßen Polymeren werden zur Bestimmung als ca.0.0001 cm dicke Lichtwellenleiter eingesetzt.

Tabelle 7

Brechwerte von Ionenen:

| Formel | Struktur | Gegen ion $X^-$ | $n_{D1}/v_D$ |
|---|---|---|---|
| I-6/10$_{Stat}$-Me-X | 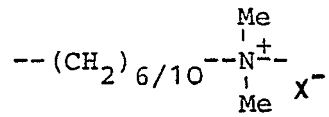 (statistisches Copolymer) | 1/2 $CdJ_2Br_2^{2-}$<br>1/2 $CdBr_4^{2-}$ | 1,6250/ 22,6<br>1.5858/ 35,9 |
| I-6/Do-Et-X | 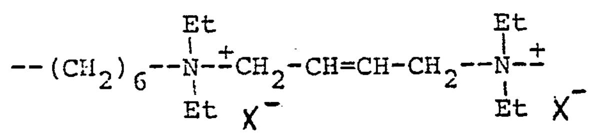 | 1/2 $HgJ_4^{2-}$ | 1,7227/ 13,2 |
| I-10/Do-Me-X | 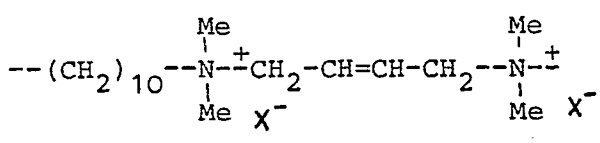 | 1/2 $ZnBr_4^{2-}$ | 1,5814/ 65,0 |
| I-Do/Pip-Me-X | 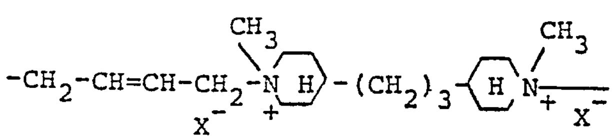 | 1/2 $CdBr_4^{2-}$<br>$BPh_4^-$ | 1,6025/ 59,7<br>1,6124/ 41,0 |

Trägt man die erhaltenen optischen Kennwerte ($n_D$, $v_D$) der Ionene in das nD - vD -Diagramm (vgl.H.Dislich, 1.c.) ein, so wird deutlich, daß die erfindungsgemäßen Polymeren einen Bereich abdecken, der bisher nur den anorganischen Gläsern vorbehalten war.

Die erfindungsgemäßen Polymeren der Formel (I) lassen sich mittels verschiedener Beschichtungsmethoden, z.B. mittels Spincoating, zu dünnen Filmen auf diversen Substraten, z.B. Glas, verarbeiten, oder können aus der Schmelze zu festen Formlingen, z.B. Prismen oder optischen Linsen, verarbeitet werden, z.B. durch Spritzgießen oder im Spritzprägeverfahren (vgl. z.B. G. Klepek, Kunststoffe 77 (1987) 11).

Auf Grund ihrer hervorragenden optischen Eigenschaften ("optische Lage" im $n_D$ -$v_D$-Diagramm), und insbesondere auf Grund der zu erzielenden hohen Werte des Brechungsindex bis ca. 2 eignen sich die erfindungsgemäßen Polymeren der Formel (I) hervorragend für die verschiedensten Anwendungen in der Optik. Ihre Anwendung ist dabei nicht nur auf das Lichtwellenspektrum beschränkt, sondern erstreckt sich

auch auf das ultraviolette Spektralgebiet.

Insbesondere finden die erfindungsgemäß hergestellten Polymeren Verwendung als planare Lichtwellenleiter, als optische Bauteile, wie z.B. Fresnellinsen, Lichtwellenleiter, als optische Beschichtungen und als Sensoren.

Auf Grund ihrer chemischen, mechanischen und optischen Eigenschaften eignen sich die erfindungsgemäßen Polymere auch sehr gut zur Verwendung für Sehhilfen, wie optische Linsen, und, auf Grund ihrer physiologischen (bakteriostatischen, bakteriziden und cytotoxischen) Eigenschaften (vgl. US-PS 3 899 534, US-PS 3 928 823 und CH-PS 606 191), insbesondere für Kontaktlinsen; aber auch zur Herstellung von Gläsern für Schutzbrillen.

Gegenstand der vorliegenden Erfindung ist deshalb auch die @ Verwendung der erfindungsgemäßen Polymeren der Formel (I) als Kunststoffe in der Optik, und insbesondere für die vorstehend genannten Einsatzgebiete.

## Ansprüche

1. Verfahren zur Herstellung von Polymeren mit einer für eine optische Verwendung zweckmäßigen optischen Lage in $n_D$-$v_D$-Diagramm durch metathetischen Gegenionenaustausch, dadurch **gekennzeichnet,** daß man in einem Polymeren der Formel (I)

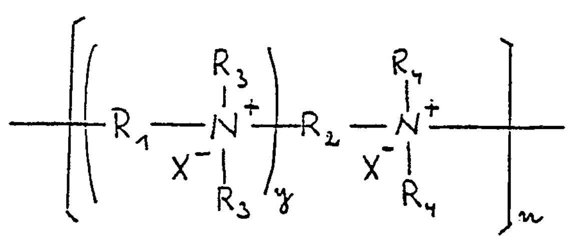

(I)

worin bedeuten:

$R_1$ und $R_2$, die gleich oder verschieden sein können, einen zweiwertigen organischen Rest;

$R_3$ und $R_4$, die gleich oder verschieden sein können, einen einwertigen organischen Rest;

n eine ganze Zahl größer als 2; und

y = 0 oder 1,

und worin $R_1$, $R_2$, $R_3$, $R_4$, y und n so ausgewählt sind, daß sie zusammen ein Polymergrundgerüst bilden, das die Glasbildung fördert und die Kristallisation hindert, und $X^-$ ein Halogenion ist,

das Halogenion durch ein Äquivalent eines von einem Halogenion verschiedenen, zur Einstellung der gewünschten Festkörpereigenschaften geeigneten ein- oder mehrwertigen organischen oder anorganischen Gegenions ersetzt.

2. Verfahren nach Anspruch 1, dadurch **gekennzeichnet,** daß in Formel (I)

$R_1$ und $R_2$ einen gesättigten oder ungesättigten Alkylen-, Arylen- oder Aralkylenrest, oder einen heterocyclischen Rest, der gegebenenfalls auch durch eine oder mehrere Heteroatome oder Heteroatome enthaltende Gruppen unterbrochen sein kann, wobei $R_1$ und/oder $R_2$ auch eine zweiwertige Polymerkette darstellen oder eine solche enthalten können;

$R_3$ und $R_4$ einen geradkettigen oder verzweigten Alkylrest, oder einen von einem zweiwertigen Rest $R_1$ und/oder $R_2$ abgeleiteten Rest, und wobei eine oder beide Restepaare $R_3$ und $R_4$ zusammen auch einen zweiwertigen Rest bilden können, oder die Reste $R_3$ und/oder $R_4$ auch zweiwertig sein können und als Substituenten der Reste $R_1$ und/oder $R_2$ zusammen mit diesen und dem Stickstoffatom einen Heterozyklus bilden können;

n = 5 bis 1000, insbesondere 50 bis 300; und

y = 0 oder 1, bedeuten.

3. Verfahren nach Anspruch 1 oder 2, dadurch **gekennzeichnet,** daß $R_1$ und $R_2$ einen gesättigten oder ungesättigten Alkylrest mit 2 bis 30, insbesondere 3 bis 15, Kohlenstoffatomen bedeuten; und

$R_3$ und $R_4$ einen geradkettigen oder verzweigten Alkylrest mit 1 bis 7 Kohlenstoffatomen, insbesondere 1 bis 4 Kohlenstoffatomen, bedeuten.

4. Verfahren nach einem der Ansprüche 1 bis 3, dadurch **gekennzeichnet,** daß $R_3$ und $R_4$ Methyl oder Ethyl bedeuten.

5. Verfahren nach einem der Ansprüche 1, 2 oder 4, dadurch **gekennzeichnet,** daß $R_1$ und $R_2$ einen p-

Xylylenrest bedeuten.

6. Verfahren nach einem der Ansprüche 1, 2 oder 4, dadurch **gekennzeichnet,** daß $R_1$ oder $R_2$, $R_3$ und $R_4$ zusammen mit einem Stickstoffatom einen 1,4-Diazo [2.2.2.]-bicyclooctanrest bilden.

7. Verfahren nach einem der Ansprüche 1, 2 oder 4, dadurch **gekennzeichnet,** daß $R_1$ oder $R_2$, $R_3$ und $R_4$ zusammen mit dem Stickstoffatom den Rest

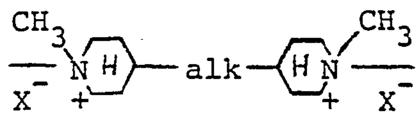

bilden, worin alk eine Alkylengruppe mit 1 bis 4 Kohlenstoffatomen bedeutet.

8. Verfahren nach einem der vorhergehenden Ansprüche, dadurch **gekennzeichnet,** daß das von einem Halogenion verschiedene Gegenion $X^-$ ein Äquivalent eines der folgenden Ionen darstellt: $TOS^-$, $CF_3SO_3^-$ , $DoSO_4^-$ , $BF_4^-$ , $ClO_4^-$ $PF_6^-$ , $SbF_6^-$ , $SCN^-$, $BPh_4^-$ , $FeCl_4^-$ $SO_4^{2}$ $PbCl_6^{2}$ , $[Fe(CN)_6]^{3-}$, $[Fe(CN)_6]^{4-}$, $[SO_3PhSO_3]^{2-}$ und $MY_4^{2}$ , worin M = Zn, Cd, Hg und Y = Cl, Br, I bedeuten.

9. Verfahren nach einem der Ansprüche 1 bis 8, dadurch **gekennzeichnet,** daß man eine Verbindung der Formel (I), worin $X^-$ ein Halogenion bedeutet,

(i) mit einem Silbersalz, das das gewünschte einzuführende Ion $X^-$ enthält, umsetzt, oder

(ii) durch Umsetzung mit feuchtem Silberoxid das Hydroxid herstellt, und das so erhaltene Hydroxid mit einer Säure, die das gewünschte einzuführende Ion $X^-$ enthält, neutralisiert, oder

(iii) mit einer Säure oder dem Alkalisalz mit dem gewünschten einzuführenden Ion $X^-$ umsetzt, oder

(iv) unter der Voraussetzung, daß das zu ersetzende Halogenidion nukleophiler ist als das gewünschte einzuführende Ion $X^-$, mit Ethylenoxid in Gegenwart einer Säure, die das gewünschte einzuführende Ion $X^-$ enthält, umsetzt.

10. Verfahren nach Anspruch 9, dadurch **gekennzeichnet,** daß das Halogen ion Chlorid oder Bromid ist.

11. Das in den Beispielen beschriebene Verfahren zur Herstellung der Polymeren der allgemeinen Formel (I), worin $X^-$ verschieden ist von einem Halogenion, durch metathetischen Gegenionenaustausch.

12. Verwendung eines nach dem Verfahren gemäß einem der Ansprüche 1 bis 11 erhältlichen Polymeren der Formel (I) mit einem von einem Halogenion verschiedenen Gegenion $X^-$ als Kunststoff in der Optik.

13. Verwendung eines nach dem Verfahren gemäß einem der Ansprüche 1 bis 11 erhältlichen Polymeren der Formel (I) mit einem von einem Halogenion verschiedenen Gegenion $X^-$ als planarer Wellenleiter, für optische Bauteile, wie z.B. Fresnellinsen, Lichtwellenleiter, als optische Beschichtungen und als Sensoren.

Fig.1

I-6,10$_{stat}$-Me-$CdJ_2Br_2$

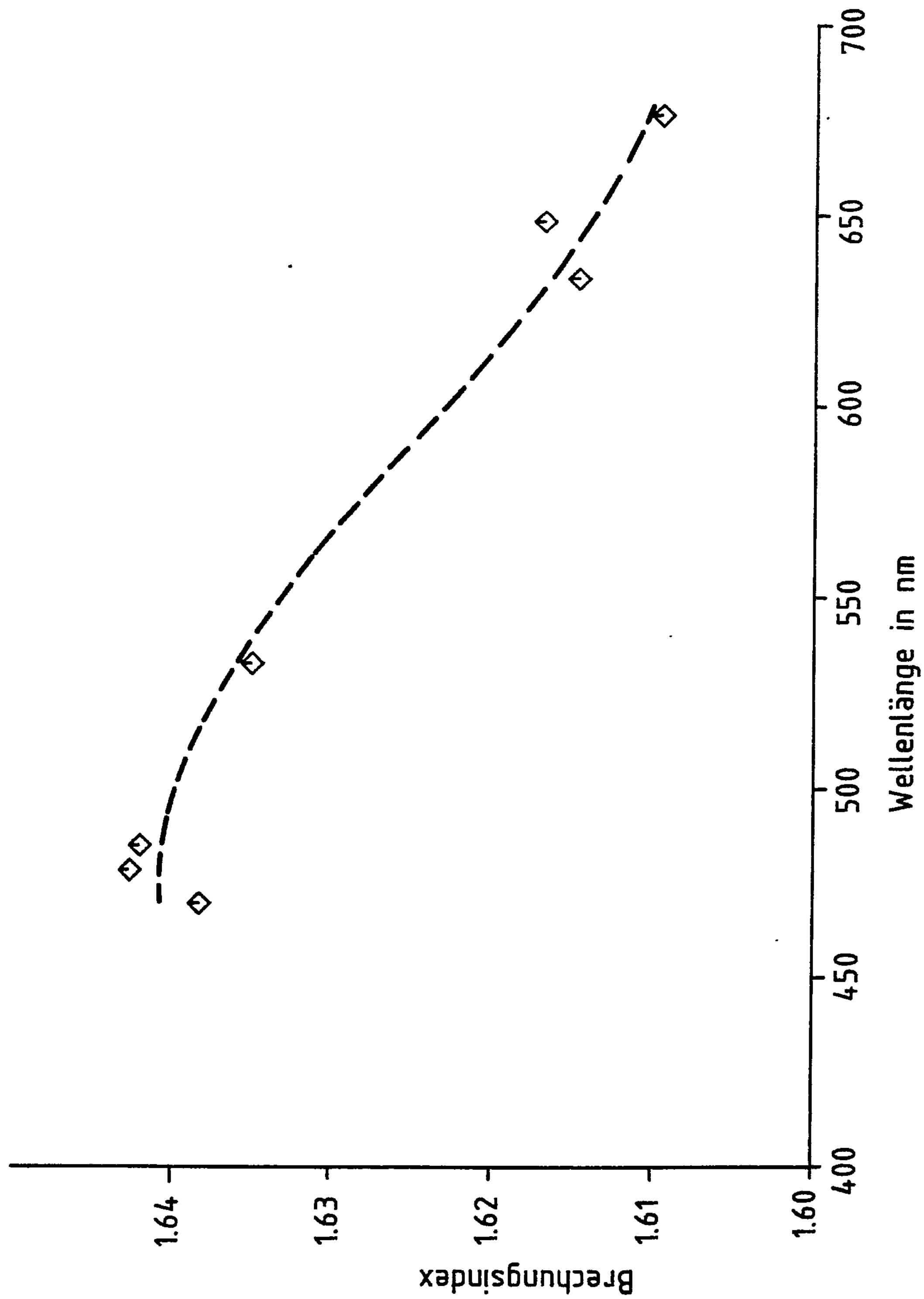

Fig. 2

I-6,10stat-Me-CdBr 4

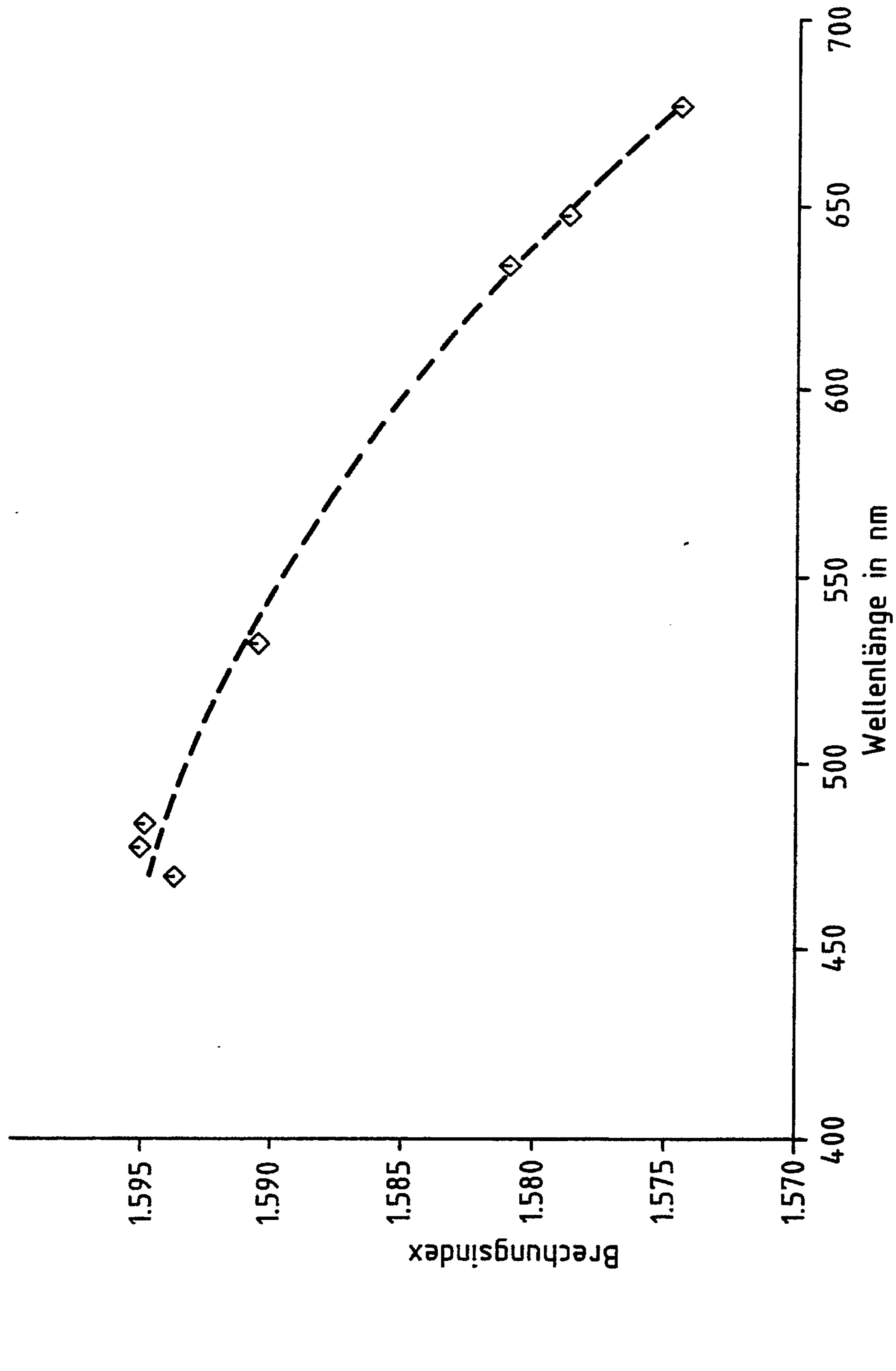

Fig. 3

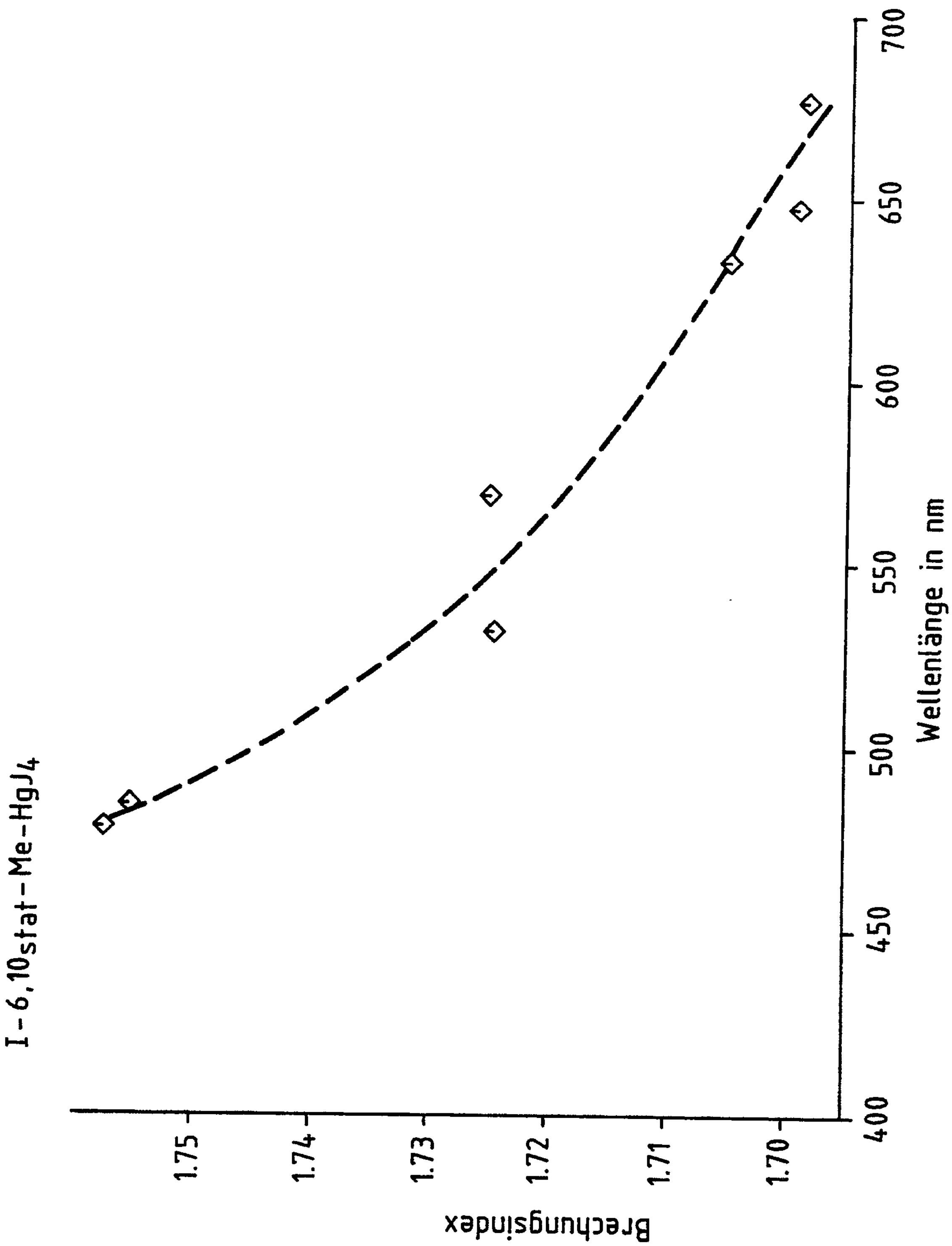
I-6,10stat-Me-HgJ4
Brechungsindex
1.75
1.74
1.73
1.72
1.71
1.70
400
450
500
550
600
650
700
Wellenlänge in nm

Fig. 4

I-6/Do-Et-$HgJ_4$

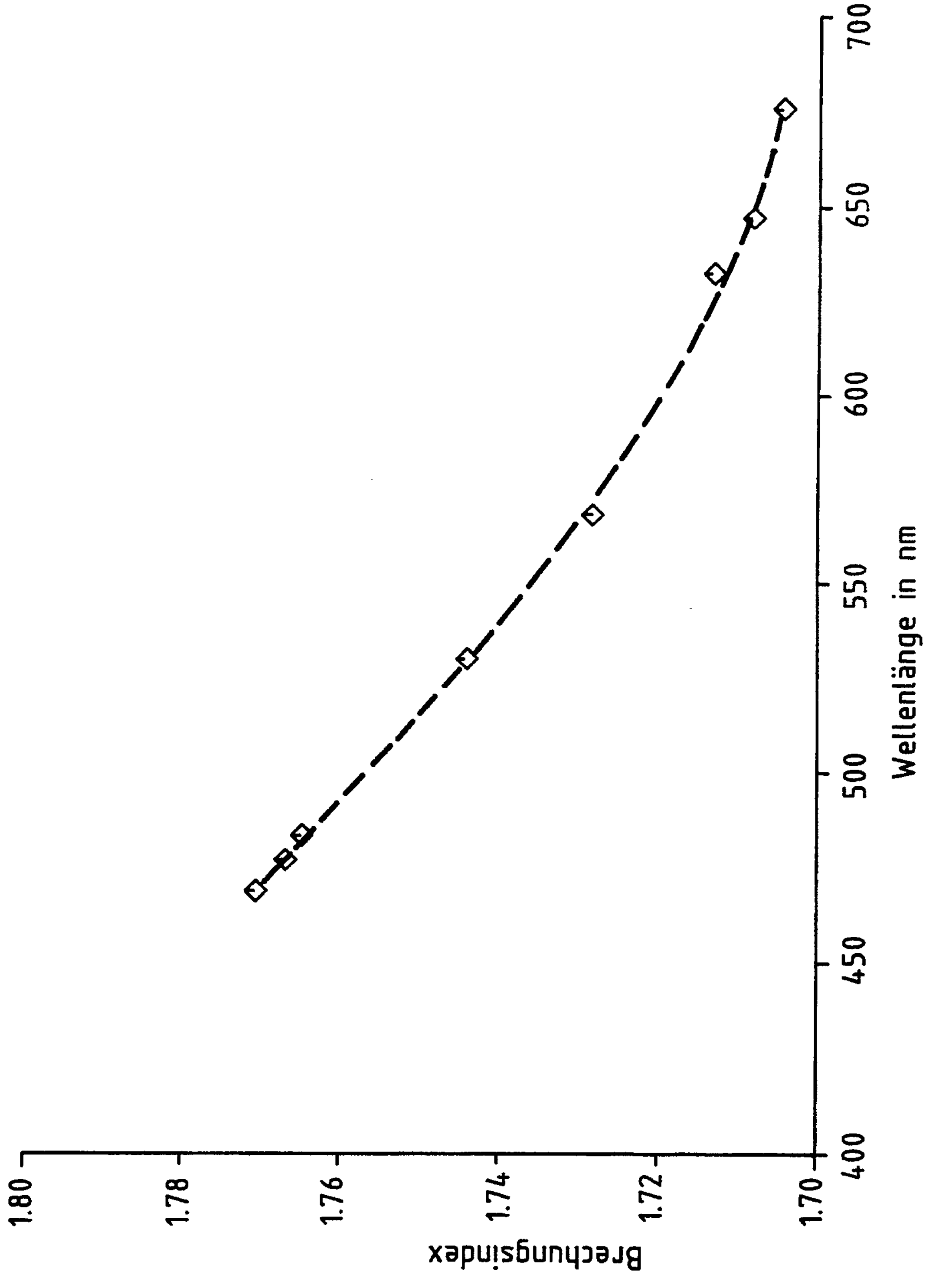

Fig. 5

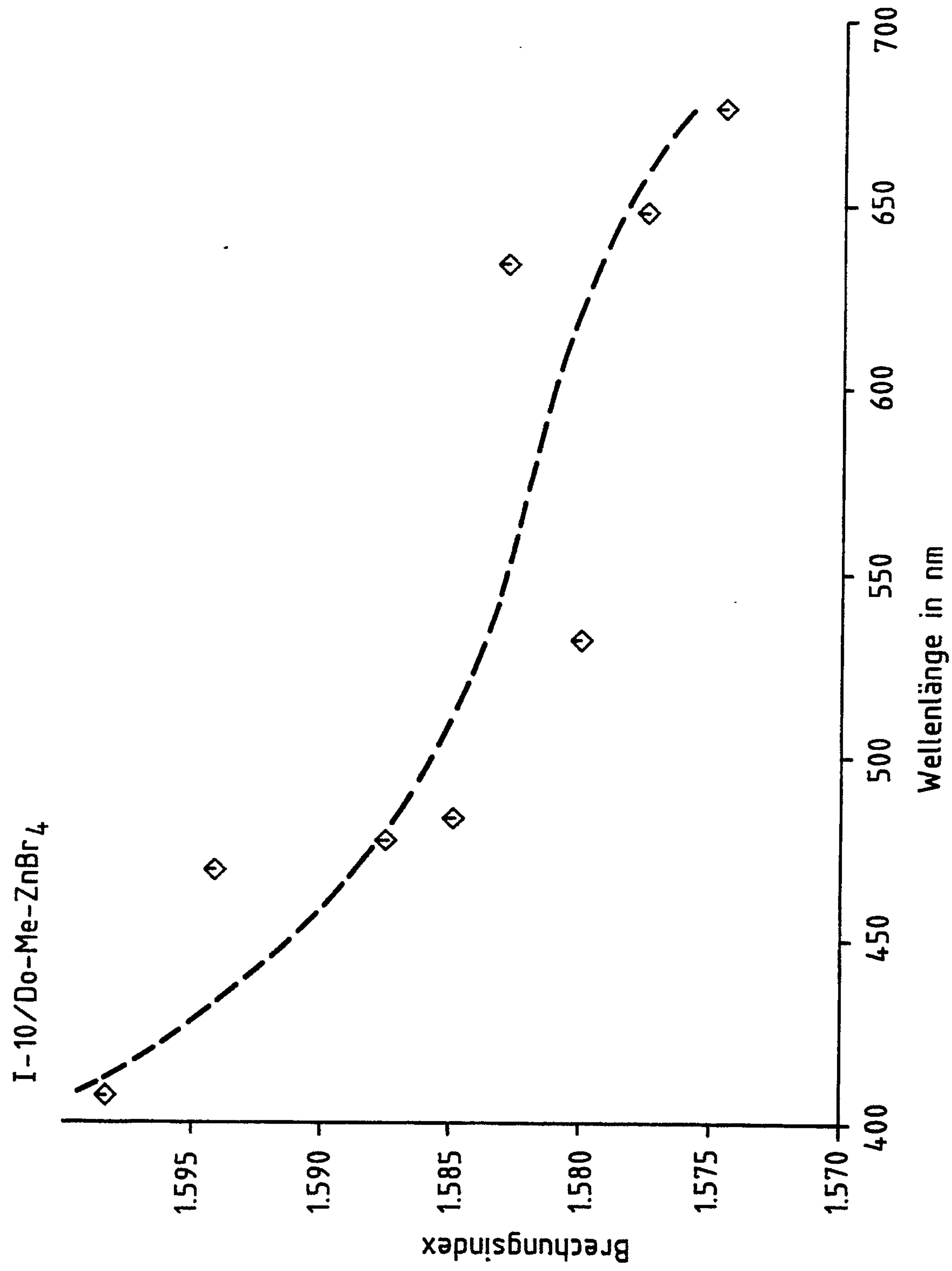
I-10/Do-Me-ZnBr4
Brechungsindex
1.595
1.590
1.585
1.580
1.575
1.570
400
450
500
550
600
650
700
Wellenlänge in nm

Fig. 6

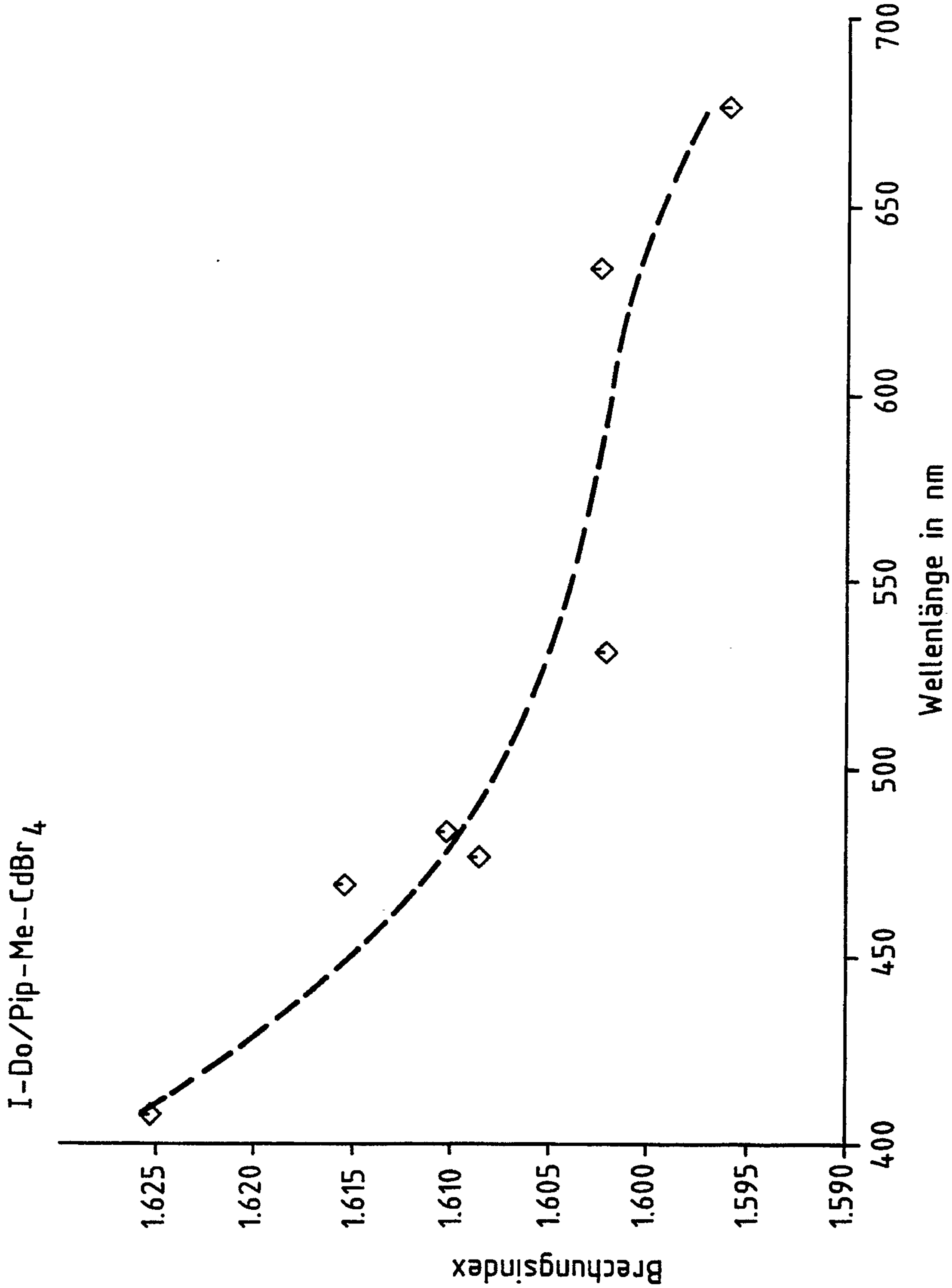
I-Do/Pip-Me-CdBr$_4$
Brechungsindex
1.625
1.620
1.615
1.610
1.605
1.600
1.595
1.590
400
450
500
550
600
650
700
Wellenlänge in nm

Fig. 7

I-Do/Pip-Me-BPh$_4$